Europäisches Patentamt

European Patent Office

Office européen des brevets

(19)

(11) **EP 0 855 859 B1**

(12) **FASCICULE DE BREVET EUROPEEN**

(45) Date de publication et mention
de la délivrance du brevet:
**12.03.2003 Bulletin 2003/11**

(21) Numéro de dépôt: **96933470.5**

(22) Date de dépôt: **02.10.1996**

(51) Int Cl.⁷: **A01N 43/54**, A01N 37/50
// (A01N43/54, 53:00, 47:38,
43:76),
(A01N37/50, 53:00, 47:38,
43:76)

(86) Numéro de dépôt international:
**PCT/FR96/01532**

(87) Numéro de publication internationale:
**WO 97/012520 (10.04.1997 Gazette 1997/16)**

(54) **COMPOSITION FONGICIDE SYNERGIQUE COMPRENANT UN COMPOSE ANALOGUE DE LA STROBILURINE**

SYNERGISTISCHE FUNGIZIDE ZUSAMMENSETZUNG, DIE EINE STROBILURIN - ÄHNLICHE VERBINDUNG ENTHALT

SYNERGISTIC FUNGICIDAL COMPOSITION INCLUDING A STROBILURIN ANALOGUE COMPOUND

(84) Etats contractants désignés:
**AT BE CH DE DK ES FI FR GB GR IE IT LI LU NL PT SE**
Etats d'extension désignés:
**SI**

(30) Priorité: **05.10.1995 FR 9511951**

(43) Date de publication de la demande:
**05.08.1998 Bulletin 1998/32**

(73) Titulaire: **Bayer CropScience S.A.**
**69009 Lyon (FR)**

(72) Inventeur: **DUVERT, Patrice**
**F-69004 Lyon (FR)**

(56) Documents cités:
**WO-A-95/15083**

- **RESEARCH DISCLOSURE, vol. 338, no. 33893, Juin 1992, HAVANT GB, pages 506-510, XP000315713 "Mixtures of fungicides and insecticides."**
- **RESEARCH DISCLOSURE, vol. 348, no. 34874, Avril 1993, HAVANT GB, pages 267-268, XP000304224 "Mixtures of fungicides and herbicides."**

Printed by Jouve, 75001 PARIS (FR)

## Description

La présente invention a pour objet une composition fongicide synergique comprenant un composé analogue de la strobilurine et un procédé mettant en oeuvre ladite composition et destiné à protéger, à titre curatif ou préventif, les cultures contre les attaques fongiques.

On connaît, notamment par les demandes de brevet européen EP 253213 ou 398692 ou par la demande internationale WO 9208703. des composés analogue de la strobilurine à action fongicide, permettant de prévenir la croissance et le développement de champignons phytopathogènes susceptibles d'attaquer les cultures. WO 9515083 décrit des mélanges fongicides d'analogues de la strobilurine et entre autres de procymidone.

Il est cependant toujours désirable d'améliorer le spectre d'activité et l'efficacité de tels composés à action fongicide, ou de les renforcer en les associant à d'autres molécules afin d'obtenir un produit plus performant ou encore de prévenir l'apparition de souches fongiques résistantes à ces nouveaux fongicides.

Il est également très souhaitable de disposer de produits fongicides bénéficiant d'une persistance d'action améliorée, de nature à espacer dans le temps le nombre de traitements phytosanitaires nécessaires au bon contrôle des parasites.

Il est dans tous les cas particulièrement avantageux de pouvoir diminuer la quantité de produits chimiques épandus dans l'environnement. tout en assurant une protection performante des cultures contre les attaques fongiques.

Il a maintenant été trouvé qu'un (ou plusieurs) des objectifs précédents pouvait être atteint grâce à la composition fongicide selon la présente invention.

La présente invention a donc pour objet une composition fongicide synergique comprenant un composé A tel que défini ci-après et un composé fongicide B: l'iprodione

ladite composition comprenant les composants A et B dans un rapport en poids A/B, compris entre 0.02 et 5, de préférence entre 0.0625 et 1,33.

Le composé A est le méthyl-(E)-2-{2-[6-(2-cyanophenoxy)pyrimidin-4-yloxy]phenyl}-3-methoxyacrylate, le methyl-(E)-methoximino[$\alpha$-(o-tolyloxy)-o-tolyl]acetate ou le N-methyl-(E)-methoxymino[2-(2,5-dimethyl phenoxymethyl)phenyl]acetamide.

De manière parfaitement inattendue, la composition selon l'invention améliore de façon notable l'action des matières actives prises séparément pour un nombre de champignons particulièrement nuisibles pour les cultures, comme en particulier la vigne ou les solanées. Cette amélioration se traduit notamment par une diminution des doses de chacun des constituants, ce qui est particulièrement avantageux pour l'utilisateur et l'environnement. Le produit fongicide présente ainsi des propriétés synergiques attestées par l'application de la méthode de Tammes, "Isoboles, a graphic représentation of synergism in pesticides" Netherlands Journal of Plant Pathology, 70(1964), p. 73-80 ou comme défini par Limpel, L.E., P.H. Schuldt et D.Lammont, 1962, Proc. NEWCC 16:48-53, en utilisant la formule suivante, encore appelée formule de Colby :

$$E = X + Y - X.Y/100$$

dans laquelle:

- E est le pourcentage attendu d'inhibition de la croissance du champignon par un mélange des deux fongicides A et B à des doses définies, respectivement égales à a et b ;
- X est le pourcentage d'inhibition observé par le fongicide A à la dose a,
- Y est le pourcentage d'inhibition observé par le fongicide B à la dose b.

Quand le pourcentage d'inhibition observé du mélange est supérieur à E, il y a synergie.

De manière préférée, le rapport A/B est compris entre 0.05 et 5, de préférence entre 0.17 et 1.33 pour l'ensemble des cultures envisagées.

Dans le cas particulier du gazon, le rapport A/B sera généralement compris entre 0,02 et 2, de préférence entre 0.0625 et 0.25.

Les structures correspondant aux noms communs des matières actives fongicides figurant dans la définition de B sont indiquées dans l'un au moins des 2 ouvrages suivants:

- "The pesticide manual" édité par Clive TOMLIN et publié par le British Crop Protection Council. 10ème édition ;
- l'Index phytosanitaire 1994, édité par l'Association de Coordination Technique Agricole, 30ème édition.

En ce qui conceme les dérivés analogue de la strobilurine, le méthyl-(E)-2- {2-[6-(2-cyanophenoxy)pyrimidin-4-yloxy]phenyl}-3-methoxyacrylate (ou ICIA5504) est décrit dans la demande internationale WO 9208703 : le methyl-(E)-methoximino[α-(o-tolyloxy)-o-tolyl]acetate (ou BAS490F) est décrit dans la demande de brevet européen EP 253213 ; le N-methyl-(E)-methoxymino[2-(2,5-dimethyl phenoxymethyl)phenyl]acetamide (ou SSF-129) est décrit dans la demande de brevet européen EP 398692. Par ailleurs, ICIA5504 et BAS490F sont répertoriés dans l'ouvrage "The pesticide manual" précité.

La composition fongicide selon l'invention comprend, comme matière active, un composé A et un composé B en mélange avec les supports solides ou liquides, acceptables en agriculture et/ou les agents tensio-actifs également acceptables en agriculture. En particulier sont utilisables les supports inertes et usuels et les agents tensio-actifs usuels. Ces compositions recouvrent non seulement les compositions prêtes à être appliquées sur la culture à traiter au moyen d'un dispositif adapté, tel qu'un dispositif de pulvérisation, mais également les compositions concentrées commerciales qui doivent être diluées avant application sur la culture. On désigne par matière active la combinaison d' un composé A avec un composé B.

Ces compositions peuvent contenir aussi toute sorte d'autres ingrédients tels que, par exemple, des colloïdes protecteurs. des adhésifs, des épaississants, des agents thixotropes, des agents de pénétration, des stabilisants. des séquestrants, etc... Plus généralement les composés A et B peuvent être combinés à tous les additifs solides ou liquides correspondant aux techniques habituelles de la mise en formulation.

D'une façon générale. les compositions selon l'invention contiennent habituellement de 0,05 à 95 % (en poids) de matière active, un ou plusieurs supports solides ou liquides et. éventuellement, un ou plusieurs agents tensioactifs.

Par le terme "support", dans le présent exposé, on désigne une matière organique ou minérale, naturelle ou synthétique, avec laquelle la matière active est combinée pour faciliter son application sur les parties aériennes de la plante. Ce support est donc généralement inerte et il doit être acceptable en agriculture, notamment sur la plante traitée. Le support peut être solide (argiles. silicates naturels ou synthétiques, silice, résines, cires, engrais solides. etc...) ou liquide (eau, alcools, notamment le buianol etc...).

L'agent tensioactif peut être un agent émulsionnant. dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des aminés grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque la matière active et/ou le support inerte ne sont pas solubles dans l'eau et que l'agent vecteur de l'application est l'eau.

Ainsi donc, les compositions à usage agricole selon l'invention peuvent contenir la matière active dans de très larges limites, allant de 0,05 % à 95 % (en poids). Leur teneur en agent tensio-actif est avantageusement comprise entre 5 % et 40 % en poids. Sauf indication contraire les pourcentages donnés dans cette description. incluant les revendications, sont en poids.

Ces compositions selon l'invention sont elles-mêmes sous des formes assez diverses, solides ou liquides.

Comme formes de compositions solides, on peut citer les poudres pour poudrage (à teneur en matière active pouvant aller jusqu'à 100 %) et les granulés. notamment ceux obtenus par extrusion. par compactage, par imprégnation d'un support granulé, par granulation à partir d'une poudre (la teneur en matière active dans ces granulés étant entre 0.5 et 80 % pour ces derniers cas). les comprimés ou tablettes effervescents.

La composition fongicide selon l'invention peut encore être utilisée sous forme de poudres pour poudrage ; on peut aussi utiliser une composition comprenant 50 g de matière active et 950 g de talc ; on peut aussi utiliser une composition comprenant 20 g de matière active, 10 g de silice finement divisée et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les gels.

Les concentrés émulsionnables ou solubles comprennent le plus souvent 10 à 80 % de matière active, les émulsions ou solutions prêtes à l'application contenant, quant à elles, 0,001 à 20 % de matière active.

En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités.

A partir de ces concentrés, on peut obtenir par dilution avec de l'eau des émulsions de toute concentration désirée, qui conviennent particulièrement à l'application sur les cultures.

A titre d'exemple, voici la composition de quelques concentrés émulsionnables :

Exemple CE 1 :

- matière active        400 g/l
- dodécylbenzène sulfonate alcalin        24 g/l
- nonylphénol oxyéthylé à 10 molécules d'oxyde d'éthylène        16 g/l
- cyclohexanone        200 g/l
- solvant aromatique        q.s.p. 1 litre

Selon une autre formule de concentré émulsionnable, on utilise :

Exemple CE 2

- matière active        250 g
- huile végétale époxydée        25 g
- mélange de sulfonate d'alcoylaryle et d'éther de polyglycol et d'alcools gras        100 g
- diméthylformamide        50 g
- xylène        575 g

Les suspensions concentrées, également applicables en pulvérisation. sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

A titre d'exemple, voici une composition de suspension concentrée :

Exemple SC 1 :

- matière active        500 g
- phosphate de tristyrylphénol polyéthoxylé        50 g
- alkylphénol polyéthoxylé        50 g
- polycarboxylate de sodium        20 g
- éthylène glycol        50 g
- huile organopolysiloxanique (antimousse)        1 g
- polysaccharide        1,5 g
- eau        316,5 g

Les poudres mouillables (ou poudre à pulvériser) sont habituellement préparées de manière qu'elles contiennent 20 à 95 % de matière active, et elles contiennent habituellement, en plus du support solide, de 0 à 30 % d'un agent mouillant, de 3 à 20 % d'un agent dispersant, et. quand c'est nécessaire, de 0.1 à 10 % d'un ou plusieurs stabilisants et/ou autres additifs, comme des agents de pénétration, des adhésifs, ou des agents antimottants, colorants, etc...

Pour obtenir les poudres à pulvériser ou poudres mouillables, on mélange intimement les matières actives dans les mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

A titre d'exemple, voici diverses compositions de poudres mouillables (ou poudres à pulvériser) :

Exemple PM 1

- matière active       50%
- alcool gras éthoxylé (agent mouillant)       2,5%
- phényléthylphénol éthoxylé (agent dispersant)       5%
- craie (support inerte)       42,5%

Exemple PM 2 :

- matière active       10%
- alcool synthétique oxo de type ramifié, en C13 éthoxylé par 8 à 10 oxyde d'éthylène (agent mouillant)       0,75%
- lignosulfonate de calcium neutre (agent dispersant)       12%
- carbonate de calcium (charge inerte)       q.s.p. 100 %

Exemple PM 3 :

Cette poudre mouillable contient les mêmes ingrédients que dans l'exemple précédent, dans les proportions ci-après :

- matière active       75%
- agent mouillant       1,50%
- agent dispersant       8%
- carbonate de calcium (charge inerte)       q.s.p. 100%

Exemple PM 4 :

- matière active       90%
- alcool gras éthoxylé (agent mouillant)       4%
- phényléthylphénol éthoxylé (agent dispersant)       6%

Exemple PM 5 :

- matière active       50%
- mélange de tensio-actifs anioniques et non ioniques (agent mouillant)       2,5%
- lignosulfonate de sodium (agent dispersant)       5%
- argile kaolinique (support inerte)       42,5%

Les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les compositions fongicides selon l'invention peuvent être formulées sous la forme de granulés dispersibles dans l'eau également compris dans le cadre de l'invention.

Ces granulés dispersibles, de densité apparente généralement comprise entre environ 0.3 et 0.6 ont une dimension de particules généralement comprise entre environ 150 et 2000 et de préférence entre 300 et 1500 microns.

La teneur en matière active de ces granulés est généralement comprise entre environ 1 % et 90 %. et de préférence entre 25 % et 90 %.

Le reste du granulé comprend une charge solide et éventuellement des adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale ou, de préférence. organique. On a obtenu d'excellents résultats avec l'urée. Dans le cas d'une charge insoluble, celle-ci est de préférence minérale, comme par exemple le kaolin ou la bentonite. Elle est alors avantageusement accompagnée d'agents tensio-actifs (à raison de 2 à 20 % en poids du granulé) dont plus de la moitié comprend, par exemple, au moins un agent dispersant, essentiellement anionique. tel qu'un polynaphtalène sulfonate alcalin ou alcalino terreux ou un lignosulfonate alcalin ou alcalino-terreux, le reste étant constitué par des mouillants non ioniques ou anioniques tel qu'un alcoyl naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc...). On termine généralement par un concassage suivi d'un tamisage à la dimension de particule choisie dans les limites mentionnées ci-dessus. On peut encore utiliser des granulés obtenus comme précédemment puis imprégnés avec une composition contenant la matière active.

De préférence, il est obtenu par extrusion, en opérant comme indiqué dans les exemples ci-après.

Exemple GD1 : Granulés dispersibles

Dans un mélangeur, on mélange 90 % en poids de matière active et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

Exemple GD2 : Granulés dispersibles

Dans un mélangeur, on mélange les constituants suivants :

- matière active 75%
- agent mouillant (alkylnaphtalène sulfonate de sodium) 2%
- agent dispersant (polynaphtalène sulfonate de sodium) 8%
- charge inerte insoluble dans l'eau (kaolin) 15%

Ce mélange est granulé en lit fluide, en présence d'eau, puis séché, concassé et tamisé de manière à obtenir des granulés de dimension comprise entre 0,15 et 0,80 mm.

Ces granulés peuvent être utilisés seuls, en solution ou dispersion dans de l'eau de manière à obtenir la dose cherchée.

En ce qui conceme les compositions adaptées au stockage et au transport, elles contiennent plus avantageusement de 0.5 à 95 % (en poids) de matière active.

L'invention concerne aussi un produit comprenant au moins un composé A et au moins un composé B tels que précédemment définis pour le contrôle de champignons phytopathogènes par application simultanée, séquentielle ou séparée.

L'invention a pour autre objet un procédé de contrôle des champignons phytopathogènes d'un milieu caractérisé en ce que l'on applique au dit milieu au moins un composé A et au moins un composé B, ces composés étant tels que précédemment définis, et la combinaison de ces composés étant dans une quantité totale efficace et non phytotoxique.

L'invention a plus précisément pour objet un procédé de lutte, à titre curatif ou préventif, contre les champignons phytopathogènes par exemple des cultures ou du gazon, caractérisé en ce que l'on applique généralement sur les parties aériennes des végétaux une quantité efficace et non phytotoxique d'une combinaison d'au moins un composé A et au moins un composé B, par exemple dans une composition fongicide selon l'invention.

Les champignons phytopathogènes des cultures qui peuvent être combattus par ce procédé sont notamment ceux :

- du groupe des oomycètes :

  - du genre *Phytophthora* tel que *Phytophthora infestans* (mildiou des solanées, notamment de la pomme de terre ou de la tomate), *Phytophthora citrophthora*, *Phytophthora capsici. Phytophthora cactorum, Phytophthora palmivora. Phytophthora cinnamoni, Phytophthora megasperma, Phytophthora parasitica,*
  - de la famille des Péronosporacées. notamment *Plasmopara viticola* ( mildiou de la vigne). *Plasmopara hals-*

*tedei* (mildiou du tournesol), *Pseudoperonospora sp* (notamment mildiou des cucurbitacees et du houblon), *Bremia lactucae* (mildiou de la laitue), *Peronospora tabacinae* (mildiou du tabac),

- du groupe des adélomycètes:

  - du genre *Alternaria*, par exemple *Alternaria solani* (alternariose des solanées, et notamment de la tomate et des pommes de terre ),
  - du genre *Guignardia,* notamment *Guignardia bidwellii* (black rot de la vigne),
  - du groupe des *Oïdiums*, par exemple oïdium de la vigne (*Uncinula necator*) ; oïdium des cultures légumières. par exemple *Erysiphe polygoni* (oidium des crucifères) ; *Leveillula taurica. Erysiphe cichoracearum. Sphaerotheca fuligena*; (oïdium des cucurbitacées, des composées. de la tomate) ; *Erysiphe communis* (oïdium de la betterave et du chou) ; *Erysiphe pisi* (oïdium du pois, de la luzerne) ; *Erysiphe polyphaga* (oïdium du haricot et du concombre) ; *Erysiphe umbelliferarum* (oïdium des ombellifères, notamment de la carotte) ; *Sphaerotheca humuli* (oïdium du houblon) ; *Erysiphe graminis* (oïdium des céréales),
  - du genre *Septoria*, par exemple *Septoria nodorum* ou *Septoria tritici* (septoriose des céréales),
  - du genre *Sclerotinia*, par exemple *Sclerotinia sclerotinium* ou *Sclerotinia homeocarpa* (sclerotiniose du gazon),

- du groupe des Basidiomycètes :

  - du genre *Puccinia,* par exemple *Puccinia recondita* ou *striiformis* (rouilles du blé),
  - de la famille *Rhizoctonia* spp.

Un classement fait non plus par champignons visés mais par cultures cibles peut être illustré comme ci-dessous :

- orge: helminthosporiose (*Helminthosporium*),
- colza: alternariose (*Alternaria* spp.). pourriture (*Botrytis cinerea*). sclérotiniose (*Sclerotinia sclerotinium*)
- vigne: oïdium (*Uncinula necator*), mildiou *(Plasmopara viticola)*. pourriture (*Botrytis cinerea*). excoriose (*Phomopsis viticola*) et black-rot (*Guignardia bidwellii*).
- solanées: mildiou (*Phytophthora infestans*), altemariose (*Alternaria solani*) et pourriture (*Botrytis cinerea*).
- cultures légumières: mildious (*Peronospora* spp.. *Bremia lactucae*, *Pseudoperonospora* spp.), alternariose (*Alternaria* spp.). sclérotiniose (*Sclerotinia* spp.), pourriture (*Botrytis cinerea*), oïdium (*Erysiphe* spp.; *Sphaerotheca fuliginea*), pourriture du pied ou des racines (*Rhizoctonia* spp.),
- riz: pourriture du pied ou des racines (*Rhizoctonia* spp.),
- arboriculture: tavelure (*Venturia inaequalis*), oïdium (*Podosphaera leucotricha*), alternariose (*Alternaria* spp.), pourriture *(Botrytis cinerea*) et moniliose (*Monilia fructigena*),
- agrumes: tavelure (*Elsinoe fawcetti*), mélanose (*Phomopsis citri*) et maladies à *Phytophthora* spp..
- banane: cercosporiose (*Mycosphaerella figiensis*).
- gazon: rouille, oïdium, helminthosporiose, maladies telluriques (*Microdochium nivale*, *Pythium* spp., *Rhizoctonia solani*, *Sclerotinia homeocarpa*...).

La composition fongicide objet de l'invention est appliquée au moyen de différents procédés de traitement tels que :

- la pulvérisation sur les parties aériennes des cultures à traiter d'un liquide comprenant ladite composition,
- le poudrage, l'incorporation au sol de granulés ou de poudres. l'arrosage, l'injection dans les arbres ou le badigeonnage.

La pulvérisation d'un liquide sur les parties aériennes des cultures à traiter est le procédé de traitement préféré.

Par "quantité efficace et non phytotoxique", on entend une quantité de composition selon l'invention suffisante pour permettre le contrôle ou la destruction des champignons présents ou susceptibles d'apparaître sur les cultures. et n'entraînant pour lesdites cultures aucun symptôme notable de phytotoxicité. Une telle quantité est susceptible de varier dans de larges limites selon le champignon à combattre, le type de culture, les conditions climatiques. et les composés compris dans la composition fongicide selon l'invention. Cette quantité peut être déterminée par des essais systématiques au champ. à la portée de l'homme du métier.

Les doses d'emploi lors de la mise en oeuvre du procédé selon l'invention seront généralement alors :

sur orge, colza, riz, vigne, cultures légumières. solanées, banane. arboriculture, agrumes:

100 à 1000g de composé B par ex. l'iprodione + 50 à 500 g/ha de composé A et plus précisément 300 à 600g + 100 à 400 g/ha, soit une dose totale de composés A et B comprise entre 150 et 1500 g/ha, de préférence entre 400 et 1000 g/ha.

sur gazon:

1000 à 5000g de composé B par ex. l'iprodione + 100 à 2000 g/ha de composé A et plus précisément 2000 à 4000g + 250 à 1000 g/ha. soit une dose totale de composés A et B comprise entre 1100 et 7000 g/ha, de préférence entre 2250 et 5000 g/ha.

Dans la figure jointe au présent texte, la dose de chaque matière active prise isolément, requise pour le contrôle du champignon phytopathogène au niveau indiqué, est comparée avec celle des 2 matières actives prises en mélange. La dose efficace de chaque matière active prise isolément est indiquée sur l'axe des abscisses et des ordonnées et une ligne droite est tracée coupant ces 2 axes et reliant ces 2 doses. Lorsqu'une matière active prise isolément n'est pas efficace la ligne droite est parallèle à l'axe des coordonnées qui indique les doses de cette matière active. En ce qui concerne les 2 matières actives prises en mélange, la dose du mélange à un ratio donné est indiquée par un point.

Exemple 1 : Essai in vivo de l'association de ICIA5504 avec l'iprodione sur alternariose du radis (*Alternaria brassicae*) par traitement préventif 24 heures avant contamination.

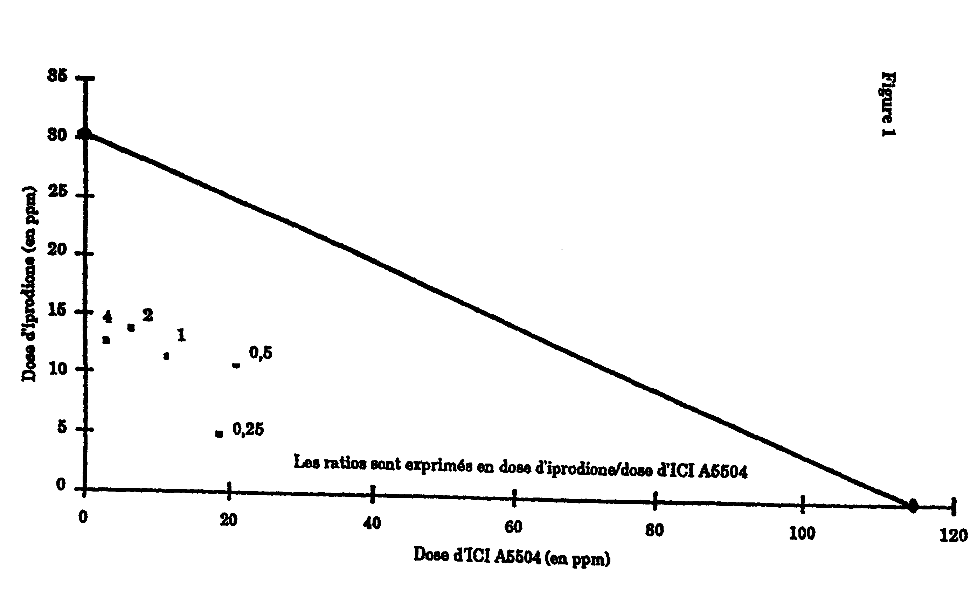

On prépare une suspension comprenant les composés A et B dans un mélange liquide constitué d'un agent tensioactif (oléate de dérivé polyoxyéthyléné du sorbitan) et d'eau.
Le composant B est l'iprodione ; le rapport A/B est de 0.25, 0,5, 1, 2 ou 4.
Des semis de radis (variété Pemot) sont cultivées dans des godets. Lorsque ces plants sont âgés de 10-12 jours (stade cotylédon, 1ère feuille), ils sont traités par pulvérisation au moyen de la suspension ci-dessus.
Des plants utilisés comme témoins sont traités par une suspension similaire mais ne contenant pas de matière active ("blanc de formulation").
Après 24 heures, on contamine chaque plant par pulvérisation d'une suspension aqueuse de spores d'*Alternaria brassica* obtenue à partir d'une culture in vitro du champignon. Ces spores sont mises en suspension à raison de 40 000 unités par $cm^3$ d'inoculum. La contamination est réalisée par pulvérisation de l'inoculum à la surface supérieure des feuilles.
Les plants contaminés sont ensuite mis en incubation pendant six jours à 18-20°C sous 90-100% d'humidité relative sous lumière naturelle.
La lecture se fait 6 jours après la contamination, en comparaison avec les plants témoins.
Les résultats obtenus sont reportés sous forme de points, correspondant à 80% de destruction du parasite et placés dans un diagramme d' isobole de Tammes qui comporte en abcisse les doses de A exprimées en ppm (mg/l) et en ordonnée les doses de B également en ppm (mg/l).
On obtient le diagramme de la figure 1. Il apparaît que l'addition d'iprodione permet, de façon parfaitement inattendue, d'abaisser la dose de A nécessaire à la destruction de 80 % du parasite en dessous de 115 ppm (mg/l) qui correspond à la dose de A seul qu'il est nécessaire d'appliquer pour obtenir le même pourcentage de destruction.
La disposition des points obtenue indique donc un effet bilatéral, qualifié en langue anglaise selon la méthode de Tammes citée précédemment de "two sided effect". Cette disposition correspond à une isobole de type III selon ladite méthode (page 74 de la référence bibliographique correspondante déjà citée) et est caractéristique d'une synergie.

Exemple 2 : Essai in vivo de l'association de ICIA5504 avec l'iprodione sur helminthosporiose de l'orge par traitement préventif 7 jours avant contamination.

Les fongicides sont utilisés aux doses suivantes :

| | |
|---|---|
| iprodione (Rovral SC 500g/l) (B) | 12.5-25-50-100-200-400-800 g/ha, |
| ICI A5504 (SC 250g/l) (A) | 1,5-3,1-6,2-12,5-25-50-100-200g/ha. |
| iprodione (B)/ICIA5504 (A) =4 | 6,2+1,5 à 800+200g/ha, |
| iprodione/ICIA5504 =2 | 3,1+1,5 à 400+200g/ha, |
| iprodione/ICIA5504 = 1 | 1,5+1,5 à 200+200g/ha, |
| iprodione/ICIA5504 = 0,5 | 0,75+1,5 à 100+200g/ha. |

Des plants d'orge (var. Express) âgés de 12 jours (stade première feuille développée) sont traités par les fongicides expérimentaux aux doses indiquées ci-dessus sous un volume de bouillie de 2501/ha (3 répétitions/dose). Sept jours après le traitement, les plants d'orge sont contaminés par une suspension de spores de *Pyrenophora teres* (10000 spores/ml). Les plants sont placés en incubation pendant 48 heures à 20°C, 100% d'humidité relative (HR). Ensuite, les plants sont transférés en serre à 20°C, 70-80% HR sous lumière naturelle. La notation de la maladie est effectuée dix jours après contamination par estimation de la surface foliaire contaminée de la première feuille (10 plants/pot).

Par comparaison au témoin (non traité-contaminé). un pourcentage d'efficacité est calculé. La synergie est ensuite quantifiée en utilisant le modèle de Colby. On obtient alors les résultats suivants:

**Efficacités observées :**

| B/A | 0 g/ha | 1.5 | 3.1 | 6.2 | 12.5 | 25 | 50 | 100 | 200 |
|---|---|---|---|---|---|---|---|---|---|
| 0 g/ha | 0 | 0 | 17.54 | 34.21 | 59.21 | 76.75 | 83.86 | 81.67 | 92.72 |
| 12,5 | 15.79 | | 78.6 | 88.68 | 83.95 | 94.04 | | | |
| 25 | 7.02 | | | 88.77 | 94.47 | 85.70 | 93.68 | | |
| 50 | 37.72 | | | | 91.49 | 96.23 | 92.54 | 90.88 | |
| 100 | 35.09 | | | | | 94.65 | 95,53 | 93.33 | 96.23 |
| 200 | 47.37 | | | | | | 95.53 | 97.37 | 95 |
| 400 | 50.88 | | | | | | | 96.14 | 97.72 |
| 800 | 59.65 | | | | | | | | 95.95 |

**Efficacités théoriques selon Colby :**

| B/A | 0 g/ha | 1.5 | 3.1 | 6.2 | 12.5 | 25 | 50 | 100 | 200 |
|---|---|---|---|---|---|---|---|---|---|
| 0 g/ha | 0 | 0 | 17.54 | 34.21 | 59.21 | 76.75 | 83.86 | 81.67 | 92.72 |
| 12,5 | 15.79 | | 30.56 | 44.60 | 65.65 | 80.42 | | | |
| 25 | 7.02 | | | 38.83 | 62.07 | 78.38 | 84.99 | | |
| 50 | 37.72 | | | | 74.60 | 85.52 | 89.95 | 88.58 | |
| 100 | 35,09 | | | | | 84.91 | 89.52 | 88.10 | 95.27 |
| 200 | 47.37 | | | | | | 91.51 | 90.35 | 96.17 |
| 400 | 50.88 | | | | | | | 91.00 | 96.42 |
| 800 | 59.65 | | | | | | | | 97.06 |

**Synergie (Gain en %) :**

| B/A | 0 g/ha | 1,5 | 3,1 | 6,2 | 12,5 | 25 | 50 | 100 | 200 |
|---|---|---|---|---|---|---|---|---|---|
| 0 g/ha | | | | | | | | | |
| 12,5 | | | +48 | +44 | +18 | +14 | | | |
| 25 | | | | +50 | +32 | +7 | +9 | | |
| 50 | | | | | +17 | +11 | +3 | +2 | |
| 100 | | | | | | +10 | +6 | +5 | +1 |
| 200 | | | | | | | +4 | +7 | -1 |
| 400 | | | | | | | | +5 | +1 |
| 800 | | | | | | | | | -1 |

**Revendications**

1.  Composition fongicide synergique comprenant un composé A qui est le méthyl-(E)-2-{2-[6-(2-cyanophenoxy)pyrimidin-4-yloxy]phenyl}-3-methoxyacrylate
    et un composé fongicide B qui est l'iprodione;
    ladite composition comprenant les composants A et B dans un rapport en poids A/B, compris entre 0,02 et 5, de préférence entre 0,0625 et 1,33.

2.  Composition fongicide synergique comprenant un composé A qui est le methyt-(E)-methoximino[α-(o-tolyloxy)-o-tolyl]acetate ou le N-methyl-(E)-methoxymino[2-(2,5-dimethyl phenoxymethyl)phenyl]acetamide;
    et un composé fongicide B qui est l'iprodione;
    ladite composition comprenant les composants A et B dans un rapport en poids A/B, compris entre 0,02 et 5, de préférence entre 0,0625 et 1,33.

3.  Composition fongicide selon l'une des revendications 1 ou 2, **caractérisée en ce que** le rapport A/B est compris entre 0,05 et 5, de préférence entre 0,17 et 1,33.

4.  Composition fongicide selon l'une quelconque des revendications 1 à 3, **caractérisée en ce qu'**elle comprend les composés A et B en association avec les supports solides ou liquides, acceptables en agriculture et/ou agents tensio-actifs également acceptables en agriculture.

5.  Composition fongicide selon l'une quelconque des revendications 1 à 4, **caractérisée en ce qu'** elle comprend de 0,05 à 95 % (en poids) de matière active.

6.  Procédé de contrôle des champignons phytopathogènes d'un milieu **caractérisé en ce que** l'on applique au dit milieu au moins un composé A et au moins un composé B, ces composés étant tels que définis par les revendications 1 ou 2, et la combinaison de ces composés étant dans une quantité totale efficace et non phytotoxique.

7.  Procédé de lutte, à titre curatif ou préventif, contre les champignons phytopathogènes des cultures ou du gazon, **caractérisé en ce que** l'on applique généralement sur les parties aériennes des végétaux une quantité efficace et non phytotoxique d'une composition fongicide selon l'une quelconque des revendications 1 à 5.

8.  Procédé selon la revendication 7, de lutte contre les champignons phytopathogènes des cultures, **caractérisé en ce que** l'on applique une dose comprise entre 150 et 1500 g/ha, de préférence entre 400 et 1000 g/ha, de composés A et B.

9.  Procédé selon la revendication 7, de lutte contre les champignons phytopathogènes du gazon **caractérisé en ce que** l'on applique une dose comprise entre 1100 et 7000 g/ha, de préférence entre 2250 et 5000 g/ha, de composés A et B.

**Claims**

1.  Synergistic fungicidal composition comprising a compound A which is methyl (E)-2-{2-[6-(2-cyanophenoxy)pyrimidin-4-yloxy]phenyl}-3-methoxyacrylate
    and a fungicidal compound B which is iprodione; the said composition comprising the components A and B in an A/B ratio by weight of between 0.02 and 5, preferably between 0.0625 and 1.33.

2.  Synergistic fungicidal composition comprising a compound A which is methyl (E)-methoxyimino-[α-(o-tolyloxy)-o-tolyl]acetate or N-methyl-(E)-methoxyimino[2-(2,5-dimethylphenoxymethyl)-phenyl]acetamide
    and a fungicidal compound B which is iprodione; the said composition comprising the components A and B in an A/B ratio by weight of between 0.02 and 5, preferably between 0.0625 and 1.33.

3.  Fungicidal composition according to either of Claims 1 and 2, **characterized in that** the A/B ratio is between 0.05 and 5, preferably between 0.17 and 1.33.

4.  Fungicidal composition according to any one of Claims 1 to 3, **characterized in that** it comprises the compounds A and B as a mixture with the solid or liquid vehicles which are acceptable in agriculture and/or the surface-active agents which are also acceptable in agriculture.

5. Fungicidal composition according to any one of Claims 1 to 4, **characterized in that** it comprises from 0.05 to 95 % (by weight) of active material.

6. Process for controlling the phytopathogenic fungi of a medium, **characterized in that** at least one compound A and at least one compound B, these compounds being as defined by Claims 1 or 2, and the combination of these compounds being in an effective and non-phytotoxic total quantity, are applied to the said medium.

7. Process for the curative or preventive control of fungi which are phytopathogenic towards crops or lawns, **characterized in that** an effective and non-phytotoxic amount of a fungicidal composition according to any one of Claims 1 to 5 is generally applied on the aerial parts of the plants.

8. Process according to Claim 7, for the control of fungi which are phytopathogenic towards crops, **characterized in that** a dose of between 150 and 1 500 g/ha, preferably between 400 and 1 000 g/ha, of compounds A and B is applied.

9. Process according to Claim 7, for the control of fungi which are phytopathogenic towards lawns, **characterized in that** a dose of between 1 100 and 7 000 g/ha, preferably between 2 250 and 5 000 g/ha, of compounds A and B is applied.


**Patentansprüche**

1. Synergistische fungizide Zusammensetzung, die eine Verbindung A, bei der es sich um das Methyl-(E)-2-{2-[6-(2-cyanophenoxy)-pyrimidin-4-yloxy]phenyl}-3-methoxyacrylat handelt, und eine fungizide Verbindung B, nämlich das Iprodion, enthält, wobei die Zusammensetzung die Komponenten A und B in einem Gewichtsverhältnis A/B im Bereich von 0,02 bis 5 und vorzugsweise 0,0625 bis 1,33 enthält.

2. Synergistische fungizide Zusammensetzung, die eine Verbindung A, bei der es sich um das Methyl-(E)-methoxi-mino[$\alpha$-(o-tolyloxy)-otolyl]acetat oder das N-Methyl-(E)-methoximino[2-(2,5-dimethylphenoxymethyl)phenyl]acetamid handelt, und eine fungizide Verbindung B, nämlich das Iprodion, enthält, wobei die Zusammensetzung die Komponenten A und B in einem Gewichtsverhältnis A/B im Bereich von 0,02 bis 5 und vorzugsweise 0,0625 bis 1,33 enthält.

3. Fungizide Zusammensetzung nach einem der Ansprüche 1 oder 2, **dadurch gekennzeichnet, daß** das Verhältnis A/B im Bereich von 0,05 bis 5 und vorzugsweise im Bereich von 0,17 bis 1,33 liegt.

4. Fungizide Zusammensetzung nach einem der Ansprüche 1 bis 3, **dadurch gekennzeichnet, daß** sie die Verbindungen A und B im Gemisch mit in der Landwirtschaft akzeptablen, flüssigen oder festen Trägern und/oder in der Landwirtschaft akzeptablen grenzflächenaktiven Stoffen enthält.

5. Fungizide Zusammensetzung nach einem der Ansprüche 1 bis 4, **dadurch gekennzeichnet, daß** sie 0,05 bis 95 % (Gew.-%) Wirkstoff enthält.

6. Verfahren zur Bekämpfung phytopathogener Pilze an einem Ort, **dadurch gekennzeichnet, daß** an dem Ort mindestens eine Verbindung A und mindestens eine Verbindung B ausgebracht wird, wobei die Verbindungen in Anspruch 1 oder 2 definiert sind und die Kombination der Verbindungen in einer wirksamen und nicht phytotoxischen Gesamtmenge vorliegt.

7. Verfahren zur kurativen oder protektiven Bekämpfung von phytopathogenen Pilzen an Kulturen oder Rasen, **dadurch gekennzeichnet, daß** auf die oberirdischen Pflanzenteile eine wirksame und nicht phytotoxische Menge einer fungiziden Zusammensetzung nach einem der Ansprüche 1 bis 5 ausgebracht wird.

8. Verfahren nach Anspruch 7 zur Bekämpfung phytopathogener Pilze an Kulturen, **dadurch gekennzeichnet, daß** eine Dosis der Verbindungen A und B von 150 bis 1500 g/ha und vorzugsweise 400 bis 1000 g/ha ausgebracht wird.

9. Verfahren nach Anspruch 7 zur Bekämpfung phytopathogener Pilze an Rasen, **dadurch gekennzeichnet, daß** eine Dosis der Verbindungen A und B von 1100 bis 7000 g/ha und vorzugsweise 2250 bis 5000 g/ha ausgebracht wird.

Figure 1

Dose d'iprodione (en ppm)

Dose d'ICI A5504 (en ppm)

Les ratios sont exprimés en dose d'iprodione/dose d'ICI A5504

EP 0 855 859 B1

13